(19) Europäisches Patentamt
European Patent Office
Office européen des brevets

(11) Publication number: **0 027 162**
**B1**

(12) # EUROPEAN PATENT SPECIFICATION

(45) Date of publication of patent specification: **23.01.85**

(51) Int. Cl.$^4$: **C 09 D 3/80**

(21) Application number: **80104306.8**

(22) Date of filing: **23.07.80**

(54) **UV-radiation and/or heat-curable coating composition.**

(30) Priority: **01.08.79 JP 98942/79**

(43) Date of publication of application:
**22.04.81 Bulletin 81/16**

(45) Publication of the grant of the patent:
**23.01.85 Bulletin 85/04**

(84) *Designated Contracting States:*
**DE FR GB IT**

(56) *References cited:*
**DE-A-2 534 012**
**DE-A-2 631 949**
**DE-A-2 807 605**
**DE-A-2 847 796**
**GB-A-1 476 528**
**GB-A-1 544 025**

**The file contains technical information submitted after the application was filed and not included in this specification**

(73) Proprietor: **Matsushita Electric Industrial Co., Ltd.**
**1006, Oaza Kadoma**
**Kadoma-shi Osaka-fu, 571 (JP)**

(72) Inventor: **Ikeda, Junji**
**29, Koyodai**
**Ikoma-chi, Nara-ken (JP)**
Inventor: **Saeki, Keizi**
**A46-203, 3, Sengokuhigashimachi**
**Kadoma-shi, Osaka-fu (JP)**
Inventor: **Wakahata, Tamotsu**
**3-13-3, Aoyama**
**Katano-shi, Osaka-fu (JP)**
Inventor: **Inoue, Takao**
**Fujisaka-so B-207 1888-2, Oaza Fujisaka**
**Hirakata-shi, Osaka-fu (JP)**

(74) Representative: **Eisenführ & Speiser**
**Martinistrasse 24**
**D-2800 Bremen 1 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

**EP 0 027 162 B1**

Courier Press, Leamington Spa, England.

**Description**

The present invention relates to a coating composition which can be cured by an ultraviolet irradiating operation or the combination of the ultraviolet irradiating operation and a heating operation, and more particularly, to a composition with which a plastic molding or the other basic materials are coated and cured to form protective film, which is higher in surface hardness, and superior in scratch resistance and weather resistance.

Since the plastic is generally lower in hardness, and inferior in abrasion resistance and scratch resistance, the molding is easy to be scratched in surface and is spoiled in transparency. Among the plastic components used in electric products, containers and covers for electric cookers are scratched while they are used or while they are washed with a steel or nylon scrubbing-brush or the like, thus ruining their looks and sanitary condition. Also, the transparent panels or covers for acoustic products are likely to be scratched during the use. Accordingly, the plastic components are restricted in use and is desired to be improved.

Conventionally, in the coating composition having such uses as described hereinabove, there are proposed many methods of coating organic silicone compound, melamine compound, etc. on the surfaces of base materials such as plastic molding, etc. thereby to form the cured film. However, coating compositions are not proposed in known methods, which can provide hardness of 7H or more in pencil hardness. In addition, the coating compositions are inferior in weather resistance and abrasion resistance, thus providing unsatisfactory results. For example, the coating composition which can be improved in abrasion resistance is fragile in protective film and is easy to crack, while crack prevention results in inferior abrasion and scratch resistance. Also, these compositions proposed are of heat curing type, wherein a longer time is required to cure the compositions, and the coated compositions may be deformed and deteriorated due to heating operation, and the stable film of higher hardness cannot be obtained. Also, the pot life of each of the compositions is too short to withstand the use for a longer period of time.

Accordingly, an object of the present invention is to provide a coating composition of such characters as described hereinabove which can eliminate the disadvantages inherent to the conventional one.

According to the present invention, there is provided a coating composition containing a bridge-polmerizing unsaturated compound comprising

(a) six or more functional epoxide (meth)acrylate components,

(b) three or more functional (meth)acrylate components in an amount of 50% or more by weight,

(c) one or two functional (meth)acrylate components, and

(d) photo-polymerizing and/or heat-polymerizing start agents.

The coating composition of the present invention is applied on the surfaces of plastic construction to retain the characteristics of the plastic construction in terms of abrasion resistance, weather resistance, etc. Therefore, the present invention provides a quickly cured coating composition which can form a film superior in surface hardness, weather resistance, adherence, and transparency by performing a coating operation on the base material to cure it. The coating operation is performed directly on the base material by a coating method normally performed or is performed after proper prior treatment. The composition is cured through irradiation of the ultraviolet rays at the approximately normal temperature, is cured through heating to a heat resisting temperature or lower or is cured by the combination of the ultraviolet irradiation and the heating. The film which is capable of the initial coating performance can be formed in an extremely short time.

The object and other objects, features, aspects and advantages of the present invention will become more apparent from the following detailed description of the present invention when taken in conjunction with the accompanying embodiments.

The coating composition of the present invention contains a bridge-polymerizing unsaturated compound having acryloile group or radical and/or methacryloile group or radical, and phot-polymerizing start agent and/or heat-polymerizing start agent. In addition, the coating composition contains solvent, viscosity modifier, etc. in accordance with the use and the coating method. Epoxide acrylate series resin or epoxide methacrylate series resin is added without fail to the bridge-polymerising unsaturated compound of the composition. Although the composition which is free from the epoxide (meth) acrylate series resin is good in surface hardness, it is inferior in adherence against the base material and contracts during the curing operation to cause cracks. On the contrary, although the epoxide (meth) acrylate series resin only provides good adherence, it is not provided with good capability in terms of hardness and abrasion resistance. The respective proper amounts of them are combined to provide the quickly cured coating material which is superior in hardness and adherence. Also, these bridge-polymerizing unsaturated compound is a composition composed of different, plural components, which contains three components or more in functional group number (number of acryloile radicals or methacryloile radicals) per molecule in the proportion of 50% or more by weight and contains six components or more in total functional group number per molecule or six or more in total functional group number per molecule with considering the number of the functional groups. When the functional group number per molecule or the functional group number per molecule of the

average molecular weight is lower than six in total, the sufficient hardness of the film is not provided. Also, when three components or more in functional group number per molecule are not contained by 60% or more by weight, the composition is not provided, which forms superior film properly balanced in surface hardness, abrasion resistance, scratch resistance, weather resistance, adherence, etc.

In the concrete example of materials to be used in embodying the present invention, the bridge-polymerizing unsaturated compound containing the acryloile radical or the methacryloile radical has, within the molecule, ethylene unsaturated double bond shown by a general formula

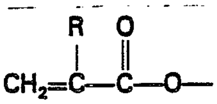

(wherein R in the formula respresents hydrogen atoms or methyl group) in the chemical constitution. The bridge-polymerizing unsaturated compound can be provided with acrylic acid, methacrylic acid and mono or polyacrylic ester, methacrylic ester such as acrylate or methacrylate of alkyl, cycloalkyl, glycydyltetrahydrofurfuryl, allyl, hydroxyalkyl, alkylene glycol, polyoxialkylene glycol, trimethyolpropane, pentaerythritol , and also, urethane (meth) acrylate resin and oligo-ester (meth) acrylate are enumerated. As the epoxide (meth) crylate resin, phenol novolak epoxide (meth) acrylate resin, cresol novolak epoxide (meth) acrylate resin and bisphenol A epoxide (meth) acrylate resin are enumerated. Also, as a compound containing three or more in the functional group of acryloile radical or methacryloile radical shown by the above general formula, there are numerated various photo-polymerizing oligomers such as trimethylol propane triacrylate, dipentaerythritol triacrylate and oligo-ester acrylate, epoxide acrylate. Also, as a composition containing six or more in functional group number per molecule, the above-described various polymerizing oligomer, in addition to dipentaerythritol polyacrylate, are enumerated.

As the polymerization start agent, there are photo-polymerization start agent and heat-polymerization start agent. As the photo-polymerization start agent, there are enumerated mixtures of one type or two types or more of benzoin, benzoin alkyl ether, a substitution benzoin, anthraquinone, alkyl substitution anthraquinone, benzyl, benzophenone and triphenyl-phosphine dibenzir-ketone. As the heat-polymerization start agent, there can be enumerated mixtures of one type or two types or more of organic peroxide such as benzoin peroxide, methyl ethyl keton peroxide, t-butyl hydro peroxide, cumene hydro peroxide, dicimil peroxide and t-butyl peroxide benzoate or azo compound such as azobisisobutyro nitrile. Also, the heat polymerization start agent functions as cure promoting agent for the photo-polymerization start agent when the heat-polymerization start agent is used together with the photo-polymerization start agent. Although, the viscosity can be lowered in accordance with the respective uses, as the organic solvent used for lower viscosity, mixed solvents of one or two or more of alcohols, ketones, ethers and esters can be used. Ethyl alcohol, acetone, toluene and xylene can be used for the proper use of the base material. However, acetone solvent is not suitable for acrylic resin and AS resin, but mixed solvent such as ethyl alcohol, iso propyl alcohol and toluene is particularly desired.

As the ultraviolet ray generating source used for curing the coating composition including the ordinary ultraviolet-ray-irradiation curing composition or the heat curing composition, sunlight, low-pressure mercury-arc lamp, medium-pressure mercury-arc lamp, high-pressure mercury-arc lamp, superhigh-pressure mercury-arc lamp, arc lamp and xenon lamp are enumerated. Also, as the heating source for the heat curing composition, hot blast, nichrome heater wire, infrared ray lamp and far infrared ray heater are enumerated.

Also, to improve the storage stability, P-benzoquinone, hydroquinone, catechol and P-methoxy phenol can be used as reaction inhibitor. Also, to provide thixotropic property, the generally known method of adding a small amount of aurothil can achieve the object.

To coat the coating composition, normally practised methods of dipping, spray flow coating, etc. can be adopted. In the present invention, cobalt naphthenate, mangan naphthenate, amines, P-toluene sulfonamide, etc. are blended as cure promoting agent when required. Also, bubble removing agent and viscosity increasing agent can be added when required.

The present invention will be concretely described hereinafter in connection with embodiments.

Embodiment 1 through 2

In these embodiments 1 through 2 listed in Table 1, a compound of two functional groups (two (meth) acryloile radicals per molecule), and a compound of three functional groups (three (meth) acryloile radicals per molecule) were used for the bridge-polymerizing unsaturated compound containing the (meth) acrylate components radical. Accordingly, the components of embodiments essentially comprise two functional (meth) acrylate components (c), three functional (meth) acrylate components (b), polyfunctional (six functional or more) epoxide (meth) arylate components (a), and polymerization start agent component (d). Phenol novolak type epoxide acrylate (molecular weight 100 through 10000) as the components (a), trimethyol propane triacrylate as the components (b), hydroxy ethyl methacrylate as the components (c) and benzoin isopropyl ether as the component (d) were mixed

respectively in given amounts, and repeatedly mixed and stirred for thirty minutes' melting operation in an oil bath at 80°C.

The coating composition thus obtained was applied on the acrylic plate. The test results provided by a given test method as mentioned hereinbelow are given in Table 1.

Embodiments 3 through 6

In these embodiments 3 through 6 listed in Table 2, a given amount of isopropyl alcohol was added as organic solvent to the coating composition of the embodiment 2 to decrease the viscosity. Thereafter, it was applied on an acrylic base plate (pencil hardness 4H) and an AS base plate (pencil hardness 2H). The test results in terms of pencil hardness, scratch property and adherence are shown in Table 2.

The coated products listed within Tables 1 and 2 were measured in physical properties of adherence, pencil hardness, scratch resistance and weather resistance by the following methods.

(1) Adherence between the coated film and the molding.

One hundred cloth hatches each being square 1 mm were cut with a knife of sharp blade edge. Cellophane adhesive tape was strongly depressed onto and forced to be peeled off from the coated film to measure the film adherence. The adherence is represented in three stages A, B and C in quality order.

(2) Pencil hardness

A pencil hardness measuring instrument was used for measuring the pencil hardness of the coated film with the load being 1000 g.

(3) Scratch resistance

The face of the coated film was scrubbed with steel wool to show, in three stages, how the coated face was scratched.

A: No scratches are provided by strongly scrubbing operation.
B: Some scratches were provided by strongly scrubbing operation.
C: The coated face is remarkably injured.

(4) Weather resistance.

The changes in characteristics of the coated film were checked after the coating products were left to chance for forty-eight hours in the weather meter. Also, the results in the Tables 1 and 2 obtained by application of the coating material on the acryl base plate and after thirty minutes' irradiation by a high-pressure ultraviolet lamp 12m $W/cm^2$.

TABLE 1

| No. | | Coating Composition | | | | Test Results | | | |
|---|---|---|---|---|---|---|---|---|---|
| | | Component (a) | Component (b) | Component (c) | Component (d) | Adherence | Pencil Hardness | Scratch Resistance | Weather Resistance |
| Embodiments | 1 | | | | 5 parts | C | 9H | A | – |
| | 2 | | | 100 parts | 5 parts | A | 3H | C | – |
| | 3 | 100 parts | | | 5 parts | A | 4H | C | – |
| | 4 | | 50 parts | 50 parts | 5 parts | B | 6H | B | – |
| | | 5 parts | 90 parts | 5 parts | 5 parts | A | 9H | A | no changes |
| | | 10 parts | 80 parts | 10 parts | 5 parts | A | 9H | A | no changes |

No. 1 to 4 are comparative embodiments.

TABLE 2

| No. | | Coating Conditions | | | Test Results | | | |
|---|---|---|---|---|---|---|---|---|
| | | Embodiment No. 6 | Solvent | Coated Base Plate | Adherence | Pencil Hardness | Scratch Resistance | Weather Resistance |
| Embodiments | 7 | 70 parts | 30 parts | acryl | A | 9H | A | no changes |
| | 8 | 70 parts | 30 parts | AS | A | 7H | A | no changes |
| | 9 | 50 parts | 50 parts | acryl | A | 6H | B | no changes |
| | 10 | 50 parts | 50 parts | AS | A | 4H | C | no changes |

With the results of Tables 1 and 2, the coated films of embodiments which have been cured after the irradiation of the ultraviolet rays for a given period of time are hard to be scratched if the films are washed with a steel-scrubbing brush, a nylon brush or the like, thus keeping its original fine appearance, Also, since the organic peroxide or the like is not contained as the polymerization start agent in each of the embodiments, the coating film is provided which is superior in terms of food sanitation. As apparent from these embodiments, the compositions, which are well balanced in characteristics as A in adherence, 7H or more in pencil hardness, A in scratch resistance, no change in weather resistance, etc., and are superior in characteristics, are provided in the embodiments 5 and 6. The compositions of embodiments 5 and 6 contain, respectively, three or more functional components in the proportion of 50% or more by weight, six or more components in the number of functional groups per molecule, and epoxide (metha) acrylate resin.

Although, in the present embodiments, the acrylate base plate and the AS base plates were used in tests, many various materials such as plastic materials, wood, etc. can be also applied. Also, the heat-polymerization start agent can be jointly used to form the coating film, for an extremely short time, on complicated shapes. In addition, the coating compositions of the present invention can be reduced in viscosity, and only the coating operation by the dipping method can make film of several micrometers.

With the above preferred embodiments, the coating composition of the present invention contains a bridge-polymerizing unsaturated compound having acryloile group and/or methacryloile group, and photo-polymerizing start agent and/or heat-polymerizing start agent. In addition, the coating composition contains solvent, viscosity modifier, etc. in accordance with the use and the coating method. Therefore, the present invention provides a quickly cured coating composition which can form a film superior in surface hardness, weather resistance, adherence and transparency by performing a coating operation on the base material to cure it. The coating operation of the composition is performed directly on the base material by a coating method normally performed or is performed after proper prior treatment, while the composition is cured through irradiation of the ultraviolet rays at the approximately normal temperature, is cured through heating to a heat resisting temperature or low or is cured by the combination of the ultraviolet irradiation and the heating, and, also, the film which is capable of the initial coating performance can be formed in an extremely short time.

**Claims**

1. A coating composition containing a bridge-polymerizing unsaturated compound, comprising
(a) six or more functional epoxide (meth)acrylate components,
(b) three or more functional (meth)acrylate components in an amount of 50% or more by weight,
(c) one or two functional (meth)acrylate components, and
(d) photo-polymerizing and/or heat-polymerizing start agents.

2. A coating composition as claimed in claim 1, wherein component (a) is a phenol novolak type epoxide acrylate of a molecular weight from 100 to 10.000.

3. A coating composition as claimed in claims 1 and 2, further containing a solvent.

**Revendications**

1. Une composition de revêtement, contenant un composé non-saturé capable de polymériser en formant des ponts, comprenant
(a) des constituants (méth) acrylates époxyde ayant un nombre de fonctions égal ou supérieur à six,
(b) des constituants (méth) acrylates, en quantité au moins égale à 50% en poids,
(c) des constituants (méth) acrylates mono- ou bi-fonctionnels, et
(d) des agents d'initiation de photopolymérisation et/ou de polymérisation thermique.

2. Une composition de revêtement comme revendiqué dans la revendication 1, dans laquelle le constituant (a) est un époxy-acrylate du type phénol-novolaque d'un poids moléculaire de 100 à 10,000.

3. Une composition comme revendiqué dans les revendications 1 et 2, contenant en outre un solvant.

**Patentansprüche**

1. Eine Beschichtungszusammensetzung, enthaltend eine brücken-polymerisierende ungesättigte Verbindung, umfassend
(a) sechs oder mehr funktionelle Epoxid-(Meth)Acrylat-Komponenten,
(b) drei oder mehr funktionelle (Meth)Acrylat-Komponenten in einer Menge von 50 Gew.-% oder mehr,
(c) eine oder zwei funktionelle (Meth)Acrylat-Komponenten, und
(d) photopolymerisierende und/oder hitzepolymerisierende Starter-Agentien.

2. Eine Beschichtungszusammensetzung nach Anspruch 1, worin die Kopmponente (a) ein Epoxid-Acrylat vom Phenol-Novolak-Typ mit einem Molekulargewicht von 100 bis 10000 ist.

3. Eine Beschichtungszusammensetzung nach den Ansprüchen 1 ur.d 2, die zusätzlich ein Lösungsmittel enthält.